# FASCICULE DE BREVET EUROPEEN

(11) **EP 4 603 549 B1**
(45) Date de publication et mention de la délivrance du brevet: **16.09.2026**
(21) Numéro de dépôt: 25157300.2
(22) Date de dépôt: 12.02.2025
(51) Int. Cl.: C09C 1/62, C09C 1/64, C09C 3/06

(54) **PROCÉDÉ DE PRÉPARATION D'UN MATÉRIAU PARTICULAIRE COLORÉ PAR GERMINATION HÉTÉROGÈNE**
VERFAHREN ZUR HERSTELLUNG EINES GEFÄRBTEN TEILCHENFÖRMIGEN MATERIALS DURCH HETEROGENE KEIMUNG
METHOD FOR PREPARING COLORED PARTICULATE MATERIAL BY HETEROGENEOUS GERMINATION

(30) Priorité: 13.02.2024 FR 2401378
(43) Date de publication de la demande: 20.08.2025
(73) Titulaire: Ugiel, 33600 Pessac (FR)
(72) Inventeur: LE BEULZE, Aurélie, Annie, Eugénie, 33370 Fargues-Saint-Hilaire (FR); CROCHET, Guillaume, 33600 Pessac (FR); DUSSAILLANT, Etienne, 33000 Bordeaux (FR); MAJIMEL, Jérôme, 33640 Portets (FR)
(74) Mandataire: Aquinov

(56) Documents cités:
- EP-B1- 3 305 857
- FR-A1- 3 096 685
- GÖPPERT ANN-KATHRIN ET AL: "Influence of anisotropy on heterogeneous nucleation of gold nanorod assemblies", vol. 235, 14 July 2022 (2022-07-14), GB, pages 132 - 147, XP093209693, ISSN: 1359-6640, Retrieved from the Internet <URL:https://pubs.rsc.org/en/content/articlepdf/2022/fd/d1fd00087j> [retrieved on 20230101], DOI: 10.1039/D1FD00087J

## Description

### Domaine technique

La présente invention se rapporte au domaine de la coloration de matériaux. L'invention a en particulier pour objet un procédé de préparation de matériaux colorés par germination hétérogène de nanoparticules métalliques, lesdites nanoparticules présentant des propriétés optiques basées sur le phénomène de plasmon de surface. L'invention vise également les matériaux colorés obtenus par le procédé, ainsi que des compositions les comprenant.

### Etat de l'art

L'utilisation d'un métal sous la forme de nanoparticules peut permettre de conférer à une suspension ou à un substrat solide comprenant lesdites nanoparticules une couleur différente de la couleur originale du métal massif (c'est-à-dire un métal n'étant pas sous forme de nanoparticules). En effet, lorsqu'une nanoparticule métallique est soumise à un champ électromagnétique dont la longueur d'onde est beaucoup plus grande que sa taille, les électrons libres de la bande de conduction localisés à la surface de ladite nanoparticule subissent le même champ et oscillent collectivement et en phase. Lorsque la fréquence de l'onde incidente correspond à la fréquence propre de ces oscillations, il se produit un phénomène de résonance, appelé la résonance de plasmons de surface. Cette résonance peut avoir lieu notamment dans les domaines du visible, des ultraviolets (UV) et de l'infrarouge. On parle alors d'éléments métalliques présentant un effet plasmonique, lesdits éléments métalliques étant sous une forme nanométrique.

La fréquence de résonance de plasmon est influencée par différents paramètres, à savoir :
- la nature du métal ;
- la taille et la forme des nanoparticules ;
- la distribution des nanoparticules, notamment la distance inter-particulaire ; et
- les propriétés optiques du substrat ou du milieu environnant, incluant notamment l'indice de réfraction.

En effet, l'indice de réfraction permet de moduler la couleur. Celle-ci est perçu différemment en fonction de l'indice de réfraction. Ainsi, la couleur d'un objet ne sera pas perçue de façon identique, si l'objet est présent dans l'air ou dans l'eau, par exemple.

Or, de façon intéressante, il est possible de moduler ces différents paramètres afin de faire varier la couleur des nanoparticules dans tout le domaine du visible, voire de déplacer la fréquence de résonance dans les UVs ou dans le proche infrarouge.

Pour y parvenir, il est connu d'utiliser des nanoparticules dites préformées présentant une résonance de plasmons de surface afin de colorer des matériaux. Cette technique est très prometteuse et elle présente des avantages significatifs par rapport aux méthodes de coloration traditionnelles. En effet, elle permet de générer une variété de couleurs, notamment des couleurs vives, sans recourir à des pigments ou des colorants présentant un risque pour la santé humaine et pour l'environnement, ce qui est particulièrement adaptée et utile pour certaines applications telles que l'art de la table, la cosmétique, la joaillerie, l'horlogerie, l'agroalimentaire ou la médecine.

Toutefois, l'utilisation de ces nanoparticules préformées présente certains inconvénients. A titre d'exemple, la production d'un matériau sous forme pulvérulente, c'est-à-dire un matériau particulaire, ayant des couleurs spécifiques nécessite un contrôle précis de la concentration des suspensions colloïdales ainsi que des nanoparticules préformées. En effet, la taille et les interactions entre les nanoparticules préformées au sein de la suspension engendre plusieurs contraintes, telles que :
- l'augmentation de la viscosité ;
- une diminution de la stabilité de la suspension ;
- des difficultés à disperser le matériau au sein de la suspension.

Pour toutes ces raisons, la concentration des nanoparticules préformées dans les suspensions colloïdales doit être finement contrôlée et maitrisée limitant ainsi la concentration de la suspension en nanoparticules préformée et indirectement l'intensité de coloration du matériau, par conséquent, l'obtention d'un bon rendement de production.

L'utilisation de nanoparticules préformées nécessite donc de mettre en œuvre des procédés complexes, comprenant de nombreuses étapes, utilisant des réactifs souvent toxiques pour la santé humaine et/ou l'environnement et nécessitant des infrastructures couteuses et énergivore.

A titre d'exemple, le brevet FR3096685 propose un nouveau procédé de préparation à partir d'un substrat, d'un matériau particulaire micrométrique coloré (c'est-à-dire sous forme pulvérulente) au moyen d'au moins un sel d'or ou au moins des nanoparticules d'or, en se basant sur le principe de germination hétérogène. L'article Göppert Ann-Kathrin et al: "Influence of anisotropy on heterogeneous nucleation of gold nanorod assemblies" décrit la synthèse de nanoparticules d'or et le brevet EP 3305857 nous enseigne un procédé de préparation d'un pigment brillant, ledit procédé comprenant une étape de chauffage.

La germination hétérogène permet de favoriser spécifiquement la nucléation et la croissance des nanoparticules à la surface d'un substrat solide, lequel joue un rôle de catalyseur de la réaction. De cette façon, le substrat solide sous forme de particules est coloré par la formation de nanoparticules colorées à sa surface, formant un matériau particulaire coloré. Ce procédé est particulièrement avantageux dans la mesure où il diminue la probabilité de demixtion lors de la mise en forme du matériau pour l'application finale.

Toutefois, l'utilisation du procédé (FR3096685) présente l'inconvénient d'être limité à certains types de substrats particulaire réduisant ainsi son potentiel d'application industriel. Par conséquent, ce procédé ne permet pas d'être adapté, transposé de façon universelle à une large gamme de support. En effet, ledit procédé n'est, par exemple, pas adapté à la coloration de grands volumes de substrat particulaire. En effet, la réalisation d'une germination hétérogène catalysée par un traitement thermique nécessite systématiquement une adaptation des paramètres entre le procédé développé à l'échelle laboratoire et le procédé à l'échelle industrielle de façon à maintenir les mêmes conditions pour l'ensemble du volume de substrat particulaire. Ces contraintes augmentent d'une part le temps de développement des nouvelles gammes de matériaux colorés et d'autre part limite sa mise en œuvre à certains types de substrat particulaire. Par ailleurs, la nécessité de chauffer le milieu réactionnel implique nécessairement des infrastructures couteuses et énergivores.

De surcroit, la prise de conscience croissante des défis climatiques associée à l'objectif mondial de réduction des émissions de gaz à effet de serre encouragent les industriels à explorer des procédés alternatifs qui sont à la fois simples, respectueux de l'environnement, universel et efficaces pour la coloration des matériaux.

Il existe donc un besoin, d'un nouveau procédé de coloration de matériaux conçu pour minimiser son impact sur l'environnement tout en maintenant une efficacité optimale et adaptable à une large gamme de support et ainsi surmontant les inconvénients de l'art antérieur.

### Résumé de l'invention

Pour répondre à ce besoin, l'invention propose un nouveau procédé permettant de pallier les inconvénients précités, notamment en étant adapté à une large gamme de substrat, et présentant une faible consommation énergétique tout en conservant une efficacité de coloration optimale. En particulier, l'invention fournit un nouveau procédé de préparation d'un matériau particulaire coloré, éventuellement capable de changer de couleur sous l'influence d'un stimulus, ledit procédé est simple, économique, garantit une stabilité optimale de la couleur et possède une importante modularité, permettant d'accéder à une grande palette de couleurs et de types de matériaux colorés, et évitant autant que possible les transferts de solvants.

Dans le contexte de l'invention, le substrat est un matériau particulaire, c'est-à-dire un matériau sous forme pulvérulente, sur lequel les ions métalliques formant des nanoparticules colorées après nucléation, vont préférentiellement nucléer et croître, formant un matériau particulaire coloré, celui-ci comprenant au moins une nanoparticule à sa surface, ladite nanoparticule présentant des propriétés plasmoniques.

Ainsi, l'invention concerne ainsi un procédé de préparation d'un matériau particulaire coloré par germination hétérogène, comprenant la mise en œuvre d'une seule étape a) de mélange à température ambiante d'une suspension, ladite suspension comprenant :
- au moins un sel d'un élément métallique choisi parmi le groupe constitué d'un sel d'or, un sel d'argent, un sel de cuivre, un sel d'aluminium, un sel de magnésium, un sel d'indium, un sel de nickel, un sel de gallium, un sel de cobalt, un sel de fer, un sel de palladium, un sel de rhodium, un sel de platine, et leurs mélanges, ledit élément métallique présentant un effet plasmonique,
- au moins un agent réducteur choisi parmi le groupe constitué par le tétrahydruroborate de sodium (NaBH₄), l'hydroquinone, le tetrabutylammoniumborohydride (TBH₄), l'hydrazine, le propanal, les sucres, l'acide citrique, l'acide ascorbique, le citrate, le Triéthanolamine (TEA), l'hydrolamine et leurs mélanges, et
- au moins un substrat particulaire choisi parmi un substrat particulaire inorganique du groupe constitué par les silicates, les verres, les oxydes de métaux, les oxydes de terres rares, les métaux, les frittes, les émaux, les glaçures, les céramiques, les pigments d'absorption, et leurs mélanges.

Selon une variante, le procédé selon l'invention comprend une étape de pré-traitement du substrat particulaire, située avant l'étape a), afin de préparer, conditionner le substrat particulaire à colorer au moyen du procédé selon l'invention. Cette étape de pré-traitement est préférentiellement réalisée au moyen d'un traitement thermique et/ou d'un traitement alcalin et/ou d'une fonctionnalisation au moyen d'un agent de couplage, ce qui permet d'activer ou d'ajouter ou modifier des charges de surface sur ledit substrat.

Un tel procédé permettant de former un matériau particulaire coloré en surmontant les inconvénients de l'art antérieur. Etant donné la mise en œuvre du procédé à température ambiante, le procédé selon l'invention présente avantageusement une faible consommation énergétique tout en présentant un temps réactionnel acceptable, réduisant ainsi les coûts opérationnels et les émissions de gaz à effet de serre par rapport à un procédé équivalent de l'art antérieur.

En effet, les inventeurs ont découvert de manière surprenante que la germination hétérogène effectuée à température ambiante, c'est-à-dire à une température comprise entre 19 et 25°C, permettait de réaliser une germination hétérogène à faible coût énergétique tout en maintenant une efficacité optimale de coloration. Pour y parvenir, les inventeurs ont notamment identifié au moins un agent réducteur d'intérêt.

Aussi, selon un mode de réalisation préféré, l'agent réducteur est choisi parmi le groupe constitué par le tétrahydruroborate de sodium (NaBH₄), l'hydroquinone, le tetrabutylammoniumborohydride (TBH₄), l'hydrazine, le propanal, le glucose, le saccharose, l'acide citrique, l'acide ascorbique, le citrate, le Triéthanolamine (TEA), l'hydrolamine et leurs mélanges.

De façon particulièrement préféré, l'agent réducteur est le Triéthanolamine (TEA), celui-ci étant particulièrement adapté à la réalisation d'une germination hétérogène à température ambiante, c'est-à-dire une réaction ne nécessitant pas d'être catalysée par un traitement thermique, tout en offrant un temps réactionnel acceptable. Alternativement, il peut également être utilisé à plus haute température. Ainsi le TEA peut être mis en œuvre à une température comprise entre 1°C et 100°C.

Ainsi, selon une variante, l'invention vise également un procédé de préparation d'un matériau particulaire coloré comprenant une seule étape a) de mélange à une température comprise entre 1°C et 100°C d'une suspension comprenant :
- au moins un sel d'un élément métallique, ledit élément métallique présentant un effet plasmonique ;
- le Triéthanolamine (TEA) ; et
- au moins un substrat particulaire.

Le procédé selon l'invention permet, ainsi, d'obtenir un spectre de couleurs variées et présente une modularité importante offrant ainsi la possibilité de colorer une grande diversité de matériaux avec une grande diversité de couleur.

Le procédé selon l'invention est adapté pour la coloration de tous types de matériau avec tous types de sels d'éléments métalliques, lesdits éléments métalliques présentant un effet plasmonique, sont choisis parmi un sel d'or, un sel d'argent, un sel de cuivre, un sel d'aluminium, un sel de magnésium, un sel d'indium, un sel de nickel, un sel de gallium, un sel de cobalt, un sel de fer, un sel de palladium, un sel de ruthénium, un sel de rhodium, un sel de platine et leurs mélanges.

Le sel d'élément métallique est un sel dans lequel l'élément métallique est à l'état d'oxydation. A titre d'exemple, le sel d'or (+III) est un sel dans lequel l'or est à l'état d'oxydation (+III).

Selon un mode de réalisation, le sel d'or (+III) est choisi parmi l'acide tétrachloroaurique HAuCl₄, le tétrachloroaurate de potassium KAuCl₄ et leur mélange, et de préférence KAuCl₄.

Selon un mode de réalisation, le sel d'argent (+I) est choisi parmi AgNO₃, AgClO₄, Ag(acac), AgCl, Ag₂SO₄ et leur mélange, et de préférence AgNO₃.

Selon un mode de réalisation, le sel de cuivre (+II) est choisi parmi copper chloride (CuCl₂), copper acetate (Cu(CH₃COO)₂), copper sulfate (CuSO₄), Cu(acac)₂, Cu₂O (+I), Cu(OH)₂, Cu(NO₃)₂ et leur mélange, et de préférence CuCl₂.

Dans le contexte de l'invention, tous les types de matériaux particulaires peuvent être utilisés comme substrat particulaire afin d'être coloré. Ainsi, le substrat particulaire peut être choisi parmi les matériaux organiques, les matériaux inorganiques, et les matériaux hybrides.

Le procédé selon l'invention est ainsi adapté pour la coloration de tous types de matériau offrant ainsi une grande diversité dans le choix du matériau que l'on souhaite colorer. Le procédé est ainsi polyvalent, simple, et efficace tout en ayant une faible consommation énergétique.

Lorsque le substrat particulaire est un substrat inorganique, ledit substrat peut être choisi parmi toutes les substances minérales connues. Dans le contexte de l'invention, ledit substrat est choisi parmi le groupe constitué par les silicates, les verres, les oxydes de métaux, les oxydes de terres rares, les métaux, les frittes, les émaux, les glaçures, les céramiques, les pigments d'absorption et leurs mélanges.

Selon un autre aspect, l'invention se rapporte également à un matériau particulaire coloré obtenu par le procédé selon l'un des quelconques modes de réalisation précédemment décrit.

Enfin, selon un dernier aspect, l'invention concerne une composition colorée comprenant au moins un matériau particulaire coloré selon l'invention, et au moins un solvant dans lequel ledit matériau particulaire coloré est dispersé.

### Description détaillée de l'invention

### Définitions

Par « agent stabilisant » au sens de l'invention, on entend des molécules chargées permettant une stabilisation électrostatique lorsqu'elles sont adsorbées à la surface des nanoparticules, ou des polymères permettant des répulsions stériques entre les nanoparticules.

Par « agent structurant » au sens de l'invention, on entend toute molécule capable de s'adsorber à la surface des nanoparticules et ainsi de favoriser la croissance de certaines faces cristallines de la nanoparticule, permettant ainsi la formation de particules anisotropes.

Par « germination hétérogène » au sens de l'invention, on entend la réduction d'un ion métallique à la surface d'un support solide, jouant le rôle de catalyseur de la germination. A l'inverse de la germination homogène où les germes se forment spontanément dans le milieu réactionnel.

Par « substrat particulaire » ou « matériau particulaire » au sens de l'invention, on entend un matériau finement divisé, assimilable à une poudre comprenant un ensemble de particules. Ledit substrat se présentant sous forme pulvérulente sur lequel les sels d'éléments métalliques vont se déposer formant des nanoparticules par nucléation. Avantageusement, la plus grande dimension dudit substrat particulaire est d'au plus 1 mm.

Par « plus grande dimension » notamment d'une nanoparticule ou du substrat particulaire, on entend au sens de l'invention, la plus grande distance séparant deux points se situant sur le contour externe de ladite nanoparticule ou dudit substrat particulaire.

Par « température ambiante » au sens de l'invention, on entend une température comprise entre 19 et 25°C.

Par « temps réactionnel acceptable » au sens de l'invention, on entend un temps de réaction d'au plus 30 minutes, préférentiellement inférieur à 15 minutes. La réaction est considérée comme terminée lorsque la couleur observée est stabilisée.

Procédé de préparation d'un matériau particulaire coloré
La présente invention a donc pour objet un procédé de préparation d'un matériau particulaire coloré par germination hétérogène à faible consommation énergétique, mise en œuvre en une seule étape.

Le procédé selon l'invention comprend ainsi une étape a) de mélange à température ambiante d'une suspension, ladite suspension comprenant :
- au moins un sel d'un élément métallique choisi parmi le groupe constitué d'un sel d'or, un sel d'argent, un sel de cuivre, un sel d'aluminium, un sel de magnésium, un sel d'indium, un sel de nickel, un sel de gallium, un sel de cobalt, un sel de fer, un sel de palladium, un sel de rhodium, un sel de platine, et leurs mélanges, ledit élément métallique présentant un effet plasmonique ;
- au moins un agent réducteur choisi parmi le groupe constitué par le tétrahydruroborate de sodium (NaBH₄), l'hydroquinone, le tetrabutylammoniumborohydride (TBH₄), l'hydrazine, le propanal, les sucres, l'acide citrique, l'acide ascorbique, le citrate, le Triéthanolamine (TEA), l'hydrolamine et leurs mélanges ; et
- au moins un substrat particulaire choisi parmi un substrat particulaire inorganique du groupe constitué par les silicates, les verres, les oxydes de métaux, les oxydes de terres rares, les métaux, les frittes, les émaux, les glaçures, les céramiques, les pigments d'absorption, et leurs mélanges.

Ledit procédé en une étape formant un matériau particulaire coloré, à partir dudit substrat particulaire. Ledit matériau particulaire coloré comprenant au moins une nanoparticule formée à la surface dudit matériau coloré.

Selon un objet de l'invention, le substrat particulaire mis en œuvre dans le procédé selon l'invention peut être préalablement coloré soit nativement, soit par la présence de nanoparticules formées à sa surface. Lesdites nanoparticules pouvant être déposées selon le procédé de la présente invention. Aussi, ledit procédé selon l'invention peut être répété plusieurs fois, et ainsi comprendre plusieurs cycles, chaque cycle permettant la formation d'un matériau particulaire coloré. Ceci est particulièrement avantageux afin d'obtenir un matériau particulaire coloré présentant la coloration souhaitée.

A titre d'exemple, un premier cycle peut être mis en œuvre à partir d'un sel d'or, puis un deuxième cycle à partir d'un sel d'argent etc.

Le procédé selon l'invention permet donc de préparer un matériau particulaire coloré par germination hétérogène tout en surmontant les inconvénients de l'art antérieur. En effet, le procédé selon l'invention présente une faible consommation énergétique réduisant ainsi les coûts opérationnels et les émissions de gaz à effet de serre par rapport à un procédé équivalent de l'art antérieur tout en conservant une efficacité de coloration similaire. Les paramètres colorimétriques du matériau particulaire coloré sont ainsi similaires à ceux d'un matériau particulaire coloré obtenu par un procédé issu de l'art antérieur, notamment le procédé selon FR3096685.

Le procédé selon l'invention est simple, dans la mesure où la formation des nanoparticules à la surface du matériau particulaire est réalisée en une seule étape, à température ambiante. En effet, la mise en œuvre à température ambiante présente de nombreux avantages, notamment un meilleur contrôle des paramètres liés à la nucléation au cours de la germination hétérogène. A l'inverse, lors d'une mise en œuvre à plus haute température, la nucléation peut être trop rapide nécessitant alors des ajustements, par exemple l'ajout d'une étape supplémentaire de stabilisation de la température, avant d'atteindre la température finale cible. Par conséquent, à température ambiante, on s'affranchit de ces contraintes.

En outre, le procédé selon l'invention est également adapté à la coloration de matériau à l'échelle laboratoire comme industrielle, indépendamment du volume de matériaux à colorer. De cette façon, le procédé selon l'invention présente une meilleure reproductibilité et un gain de temps par rapport aux procédés décrits dans l'art antérieur. En effet, celui-ci permet de s'affranchir de l'influence de la température sur la nucléation et la croissance des nanoparticules en surface du substrat particulaire, facilitant ainsi sa transposition à des échelles industrielles.

Selon un objet particulier de l'invention, la suspension de l'étape a) comprend de l'eau et/ou un solvant organique.

Selon un objet particulier de l'invention, la suspension de l'étape a) est une suspension aqueuse. Préférentiellement, ladite suspension de l'étape a) comprend au moins 5% d'eau en masse par rapport à la masse totale de ladite suspension, plus préférentiellement au moins 10% d'eau en masse par rapport à la masse totale de la suspension.

Selon un autre objet de l'invention, la suspension de l'étape a) est une suspension organique. Lorsque la suspension de l'étape a) est une suspension organique, ladite suspension comprend préférentiellement de l'alcool tel que l'éthanol.

Selon un autre mode de réalisation de l'invention, la suspension de l'étape a) peut comprendre un mélange d'eau et de solvant organique dans un ratio compris entre 5/95 et 95/5, préférentiellement compris entre 60/40 et 40/60.

Selon un objet particulièrement préféré de l'invention, le mélange de l'étape a) est réalisé à température ambiante, c'est à dire à une température comprise entre 19°C et 25°C. Ainsi, la germination hétérogène réalisée au cours de l'étape a) est effectuée sans traitement thermique. De cette façon, la réaction peut être réalisée efficacement, et ce, indépendamment du volume de matériaux à colorer.

Avantageusement, la germination hétérogène réalisée au cours de l'étape a) ne nécessite pas de traitement thermique, diminuant drastiquement la consommation énergétique nécessaire à la mise en œuvre du procédé.

Toutefois, selon une variante de la présente invention, lorsque l'agent réducteur est le TEA, le procédé peut être mis en œuvre à une température comprise entre 1°C et 100°C. Préférentiellement, le procédé est mis en œuvre à température ambiante. Toutefois, il peut être mis en œuvre à une température supérieure à 25°C pour certains substrats particulaires spécifiques. Le solvant est préférentiellement aqueux mais, selon une variante ce peut être un solvant hydroalcoolique.

De façon préférée, l'étape a) de mélange, peu importe les modes de réalisation précédemment décrits, est réalisée sous agitation, préférentiellement sous agitation mécanique, notamment au moyen d'un mélangeur à pâles ou d'un barreau aimanté, facilitant ainsi la réaction de germination hétérogène et le contact des sels d'éléments métalliques avec le substrat particulaire.

Selon l'invention, le mélange de l'étape a) comprend au moins un sel d'un élément métallique, ledit élément métallique présentant un effet plasmonique, ledit sel est choisi parmi le groupe constitué par un sel d'or, un sel d'argent, un sel de cuivre, un sel d'aluminium, un sel de magnésium, un sel d'indium, un sel de nickel, un sel de gallium, un sel de cobalt, un sel de fer, un sel de palladium, un sel de ruthénium, un sel de rhodium, un sel de platine et leurs mélanges.

Encore plus préférentiellement, le mélange de l'étape a) comprend au moins sel d'un élément métallique présentant un effet plasmonique choisi parmi un sel d'or, un sel d'argent, un sel de cuivre et leurs mélanges.

Dans le contexte de la présente invention, les sels d'éléments métalliques sont les précurseurs des nanoparticules qui seront formées par germination hétérogène sur le substrat particulaire ou éventuellement sur un matériau particulaire coloré selon le procédé de l'invention, afin d'obtenir un matériau particulaire coloré selon la présente invention.

Selon un autre mode de réalisation particulier, le mélange de l'étape a) comprend au moins deux sels d'éléments métalliques distincts, chacun présentant un effet plasmonique. Selon une variante de l'invention, le mélange de l'étape a) comprend au moins deux sels d'éléments métalliques distincts, chacun étant ajouté dans ledit mélange successivement et chacun présentant un effet plasmonique. En d'autres termes, un premier sel d'éléments métalliques peut être ajouté afin de colorer le substrat particulaire et un deuxième sel d'éléments métalliques peut-être ajouté afin de colorer le matériau particulaire coloré avec le premier sel, afin d'obtenir un matériau particulaire coloré, celui-ci comprenant au moins deux nanoparticules colorées distinctes.

Préférentiellement, le mélange de l'étape a) comprend au moins un sel d'or et un sel d'argent. Lesdits sels pouvant être ajouté successivement ou simultanément.

Selon un autre mode de réalisation particulier, le mélange de l'étape a) comprend au moins trois sels d'éléments métalliques distincts présentant un effet plasmonique. Lorsqu'il comprend trois sels distincts, le mélange de l'étape a) comprend préférentiellement au moins un sel d'or, un sel d'argent et un sel de cuivre. Lesdits sels pouvant être ajouté successivement ou simultanément.

De façon particulièrement avantageuse, l'association et la combinaison de plusieurs sels d'éléments métalliques distincts présentant chacun un effet plasmonique permet d'élargir la diversité de couleurs envisageables. Par conséquent, par extension, d'élargir la diversité de matériau particulaire coloré obtenu au moyen du procédé selon l'invention.

Selon l'invention, le mélange de l'étape a) comprend au moins un agent réducteur choisi parmi le groupe constitué du tétrahydruroborate de sodium (NaBH₄), de l'hydroquinone, du tetrabutylammoniumborohydride (TBH₄), de l'hydrazine, le propanal, du Triéthanolamine (TEA), des boranes, des acides organiques, des amines, des sucres et de leurs mélanges.

Plus préférentiellement, le mélange de l'étape a) comprend au moins un agent réducteur choisi parmi le tétrahydruroborate de sodium (NaBH₄), l'hydroquinone, le tetrabutylammoniumborohydride (TBH₄), l'hydrazine, le propanal, le glucose, le saccharose, l'acide citrique, l'acide ascorbique, le citrate, le Triéthanolamine (TEA), l'hydrolamine et leurs mélanges.

Lorsque l'agent réducteur est choisi parmi les amines, celui-ci est préférentiellement choisi parmi le Triéthanolamine (TEA) et l'hydrolamine.

Lorsque le mélange de l'étape a) comprend au moins un agent réducteur choisi parmi les sucres, celui-ci est préférentiellement choisi parmi le glucose ou le saccharose.

Lorsque le mélange de l'étape a) comprend au moins un agent réducteur choisi parmi les acides organiques, celui-ci est préférentiellement choisi parmi l'acide ascorbique et ses dérivés et l'acide citrique et ses dérivés.

Selon un autre mode de réalisation, l'étape a) comprend du citrate en tant qu'agent réducteur.

Préférentiellement, le mélange de l'étape a) comprend un ratio molaire/massique dudit agent réducteur et substrat particulaire compris entre 10 et 6500 (mole/gramme), plus préférentiellement compris entre 50 et 820 (mole/gramme). A l'inverse, une réaction de germination homogène est susceptible de se produire.

Préférentiellement, la plus grande dimension du substrat particulaire que l'on souhaite colorer, est compris entre 10nm et 1mm. En effet, la germination hétérogène réalisée au cours de l'étape a) est particulièrement efficace sur de tels substrats particulaires présentant de telles dimensions. A l'inverse, les nanoparticules ne pourront pas se déposer à la surface du substrat. En outre, si le substrat est supérieur à 1 mm, il ne sera pas possible de maintenir les différents éléments en suspension avec une agitation modérée.

Le substrat sur lequel la réaction de germination hétérogène va se produire, soit le substrat particulaire que l'on souhaite colorer peut se présenter sous toutes formes, notamment sous la forme de plaquettes telles que des polyèdres ou des paillettes, ou sous la forme de billes. Le procédé selon l'invention est donc universel et peut colorer de nombreux types de substrat particulaire.

Le substrat particulaire du mélange de l'étape a) peut être un matériau organique ou inorganique ou hybride.

Lorsque le matériau particulaire est inorganique, celui-ci est choisi parmi les silicates, les verres, les oxydes de métaux, les oxydes de terres rares, les métaux, les frittes, les émaux, les glaçures, les céramiques, les pigments d'absorption et leurs mélanges.

A titre d'exemple non limitatif, le mélange de l'étape a) peut comprendre un substrat particulaire inorganique tel que de la silice, du quartz, du feldspath, du calcaire, du kaolin, des oxydes métalliques, de l'aluminate, de l'alumine, du dioxyde de zirconium, des non-oxydes, des céramiques ultra réfractaires tels que des borures, des carbures, des nitrures de métaux réfracteurs, des céramiques renforcées de silicium ou de magnésium, des métaux tels que l'aluminium, le cuivre, l'agent, l'acier et leurs combinaisons.

Ainsi, très avantageusement, le procédé selon l'invention est adapté pour la coloration d'une grande variété de matériau.

Selon un autre mode de réalisation, le substrat particulaire peut être organique, préférentiellement de la cellulose.

Avantageusement, le procédé selon l'invention est réalisé à température ambiante permettant ainsi de colorer des matériaux organiques et/ou thermosensible offrant ainsi un procédé alternatif polyvalent adapté pour la coloration des matériaux thermosensibles.

Dans le contexte de la présente invention, le substrat particulaire peut être incolore, transparent, semi-transparent, opaque ou coloré. En effet, ledit substrat peut être, selon un objet particulier, coloré nativement ou par le procédé selon l'invention. Un tel mode de réalisation est particulièrement d'intérêt lorsque l'on souhaite répéter le procédé selon l'invention. A ce titre, le procédé selon l'invention comprend alors plusieurs cycles successifs au cours desquels, le matériau coloré obtenu lors du premier cycle est utilisé comme substrat lors du second cycle, etc.

Aussi, selon un objet de l'invention, le matériau particulaire de l'étape a) peut comprendre des particules recouvertes en surface d'une couche contenant au moins un oxyde de métal ou du dioxyde de silicium. Avantageusement, ladite couche d'oxyde de métal ou de dioxyde de silicium permet de faciliter l'accroche des nanoparticules formées à la surface du matériau particulaire par germination hétérogène.

Selon un autre objet, l'étape a) est réalisée en moins de 30 minutes, plus préférentiellement en moins de 15 minutes. Ainsi, le procédé selon l'invention présente avantageusement une consommation énergétique inférieure au procédé de l'art antérieur tout en présentant un temps de réalisation et une efficacité de coloration similaire.

Selon un autre mode de réalisation de l'invention, le mélange de l'étape a) peut également comprendre au moins un agent stabilisant. Lorsque la suspension comprend également au moins un agent stabilisant, celui-ci est choisi parmi les citrate, malate, succinate, acide citrique, l'alcool poly-vinylique, l'acide polyacrylique, le poly(éthylèneglycol) (PEG), les dérivés aminés tels que le diéthylamine, les dérivés soufrés tels que les thiols, les ligands à base de triphénylphosphine, les dendrimères, les tensioactifs aminés tels que le bromure de cétyltriméthylammonium (CTAB), le dodécylsulfate de sodium (SDS), le PVP (poly-n-vynilpyrrolidone), les polyelectrolytes, les monomères de type NMP, et leurs mélanges.

Selon un autre mode de réalisation, le mélange de l'étape a) peut également comprendre au moins un agent structurant. Ceci permettant avantageusement d'orienter la croissance sur certaines faces cristallines et ainsi de moduler la forme des nanoparticules formées à la surface du matériau. La maitrise de la forme des nanoparticules est un paramètre important dans la mesure où cela permet d'exploiter la résonance de plasmon des éléments métallique et donc de maitriser la couleur finale du matériau coloré.

Lorsque le mélange de l'étape a) comprend au moins un agent structurant, celui-ci est préférentiellement choisi parmi le citrate, le malate, le succinate, le polyvinylpyrrolidone (PVP), les agents tensioactifs, et leur mélange. Plus préferentiellement, les agents tensioactifs sont choisis parmi le bromure de cétyltriméthylammonium (CTAB), le diéthylamine (DEA), l'éthylènediaminetétraacétique (EDTA), et leur mélange.

Selon un autre objet, le procédé selon l'invention est mis en œuvre en une seule étape, mais il peut toutefois comprendre des étapes supplémentaires, notamment une étape d'isolation. Celle-ci permettant de séparer le matériau coloré sous forme solide de la phase liquide.

Ainsi, selon un mode de réalisation de l'invention, le procédé selon l'invention comprend la mise en œuvre des étapes suivantes :
a. mélange à température ambiante d'une suspension comprenant :
   - au moins un sel d'un élément métallique présentant un effet plasmonique ;
   - au moins un agent réducteur, et
   - au moins un substrat particulaire,
b. isolation du matériau particulaire coloré obtenu à l'étape a), ledit matériau particulaire coloré présentant au moins une nanoparticule formée à sa surface par germination hétérogène.

Préférentiellement, l'étape b) d'isolation du matériau particulaire coloré issu de l'étape a) comprend les sous-étapes suivantes :
i. séparation solide/liquide du mélange de l'étape a), pour isoler le matériau particulaire coloré de la phase liquide, ladite phase liquide comprenant les éléments libres en suspension ; et
ii. séchage pour obtenir le matériau particulaire coloré sous forme sèche.

Préférentiellement, la sous-étape i) de séparation solide/liquide est réalisée au moyen d'au moins une technique de séparation solide/liquide choisie parmi la filtration, la sédimentation, la centrifugation, l'évaporation, la lyophilisation et leurs combinaisons.

Lorsque la sous-étape i) de séparation solide/liquide est réalisée au moyen d'au moins deux techniques de séparation solide/liquide, celles-ci sont réalisées successivement, ceci diminuant avantageusement la durée de l'étape d'isolation.

Selon un mode de réalisation, l'étape b) d'isolation du matériau particulaire coloré peut comprendre, en outre, au moins une sous-étape supplémentaires de lavage ou de rinçage du matériau particulaire coloré. Ladite étape est réalisée préférentiellement après la séparation et avant le séchage.

L'étape de lavage ou de rinçage est préférentiellement réalisée à l'eau et/ou au moyen d'un solvant organique. Lorsque l'étape comprend un lavage à l'eau et au solvant organique, celui-ci peut être mis en œuvre simultanément ou successivement.

Ainsi, selon un mode de réalisation particulièrement préféré, le procédé selon l'invention comprend les étapes successives suivantes :
a. mélange selon l'un des quelconques modes de réalisation décrits précédemment, et
b. isolation du matériau particulaire coloré obtenu à la fin de l'étape a) de la phase liquide, celle-ci comprenant avantageusement les sous-étapes suivantes :
   i. séparation solide /liquide du mélange de l'étape a) de façon à isoler le matériau particulaire coloré de la phase liquide, et
   ii. optionnellement, une étape de lavage à l'eau et/ou au solvant organique du matériau particulaire isolé ; et
   iii. séchage du matériau particulaire et récupération d'un matériau particulaire coloré sous forme sèche et pulvérulente.

Selon un autre mode de réalisation de l'invention, l'étape b) d'isolation du matériau particulaire coloré peut être répétée plusieurs fois, préférentiellement de 1 à 5 fois, plus préférentiellement de 1 à 3 fois. Chaque répétition formant un cycle.

Ainsi, le procédé comprend préférentiellement une étape a) et une étape b) d'isolation, ladite étape d'isolation comprenant les sous-étapes successives suivantes :
i. séparation solide /liquide du mélange de l'étape a) de façon à isoler le matériau particulaire coloré de la phase liquide ;
ii. lavage du matériau particulaire issue de l'étape précédente ;
iii. séparation solide /liquide du mélange issu de l'étape précédente ; et
iv. séchage pour obtenir le matériau particulaire coloré comprenant au moins une nanoparticule formée à sa surface par germination hétérogène.

Les étapes de lavage successives permettent avantageusement de retirer un excédent de composés organiques, par exemple l'agent réducteur, l'agent stabilisant, l'agent structurant présents dans la suspension, qui sont susceptibles d'engendrer des problèmes sur la coloration finale.

Préférentiellement, le séchage est réalisé au moyen d'une étuve.

Selon un objet particulier de l'invention, au moins une nanoparticule est formée à la surface du matériau particulaire coloré, celle-ci présentant une plus grande dimension comprise entre 2nm et 100nm.

Avantageusement la nanoparticule formée à la surface du matériau particulaire coloré présente une forme sensiblement hémisphérique. Or, la forme sensiblement hémisphérique est la forme thermodynamiquement la plus stable, celle-ci est donc préférée pour améliorer la stabilité de la coloration. Toutefois, selon certains modes de réalisation, il est possible de moduler la forme des nanoparticules formées à la surface du matériau particulaire coloré selon les connaissances de l'Homme du métier.

Selon un autre objet de l'invention, le substrat particulaire peut-être poreux. L'utilisation de tels substrats poreux permet avantageusement d'augmenter la surface accessible et disponible pour déposer les sels d'éléments métalliques formant les nanoparticules par nucléation. Dans ce contexte, la nanoparticule formée à la surface du matériau particulaire coloré présente avantageusement une forme longitudinale, tel que la forme d'un bâtonnet, en particulier lorsque la taille des pores le permet. L'utilisation de matériau particulaire poreux permet ainsi de moduler la forme des nanoparticules d'obtenir une gamme de couleur plus étendue.

Selon un autre mode de réalisation, le procédé selon l'invention comprend la mise en œuvre des étapes suivantes :
a. mélange à température ambiante d'une suspension comprenant :
   - au moins un sel d'un élément métallique présentant un effet plasmonique ;
   - au moins un agent réducteur ; et
   - au moins un matériau particulaire, formant le matériau particulaire coloré ;
b. optionnellement, lavage du mélange,
c. ajout d'au moins un sel d'un élément métallique distinct du mélange de l'étape a) dans le mélange issu de l'étape a) ou b) ;
d. isolation du matériau particulaire coloré issu de l'étape précédente, ledit matériau particulaire coloré présentant au moins deux nanoparticules distinctes formées à sa surface par germination hétérogène.

Selon un autre mode de réalisation de l'invention, le procédé selon l'invention comprend une étape de pré-traitement du substrat particulaire, située avant l'étape a), afin de préparer, conditionner le substrat particulaire à colorer au moyen du procédé selon l'invention. Cette étape de pré-traitement est réalisée au moyen d'un traitement thermique et/ou d'un traitement alcalin, ce qui permet d'activer les charges de surface du substrat, permettant d'améliorer la nucléation de la nanoparticule, ainsi que la fixation de celle-ci sur le substrat. Cette étape de pré-traitement est suivie d'un refroidissement à température ambiante puis d'une filtration, suivi d'un séchage pour obtenir une poudre, ladite poudre comprenant une multitude de substrats particulaires, apte à être colorée au moyen du procédé selon l'invention.

Selon un autre mode de réalisation, le procédé selon l'invention comprend une étape de pré-traitement du substrat particulaire, située avant l'étape a), afin de préparer, conditionner le substrat particulaire à colorer au moyen du procédé selon l'invention. Cette étape de pré-traitement est réalisée au moyen d'un traitement de fonctionnalisation dudit substrat particulaire, ce qui permet d'ajouter et/ou modifier des charges de surface sur ledit substrat, permettant, là encore, d'améliorer la nucléation de la nanoparticule, ainsi que la fixation de celle-ci sur le substrat. Une telle étape de fonctionnalisation est mise en œuvre au moyen d'un agent de couplage adapté au substrat particulaire. Avantageusement l'agent de couplage est choisi parmi les organosilanes. A titre d'exemple lorsque le substrat est une silice, l'agent de couplage peut être un silane avec une fonction amine, aldéhyde, acrylate, isocyanate, thiol ou acide carboxylique. Cette étape de pré-traitement peut être réalisée à une température comprise entre 15 et 85°C puis suivie d'une filtration, suivi d'un séchage pour obtenir une poudre, ladite poudre comprenant une multitude de substrats particulaires, apte à être colorée au moyen du procédé selon l'invention.

L'activation ou l'ajout des charges à la surface du substrat particulaire permet notamment de promouvoir les interactions électrostatiques entre le substrat particulaire et les nanoparticules lors de la germination hétérogène de l'étape a), mais également d'augmenter le taux de greffage des sels d'élément métallique présentant un effet plasmonique sur le substrat particulaire.

Selon un autre objet de l'invention, le procédé selon l'invention consiste en la mise en œuvre des étapes successives suivantes :
a. Mélange à température ambiante d'une suspension comprenant :
   - au moins un sel d'un élément métallique, ledit élément métallique présentant un effet plasmonique ;
   - au moins un agent réducteur ; et
   - au moins un substrat particulaire,
b. isolation, et optionnellement lavage, du matériau particulaire coloré issu de l'étape a), ledit matériau particulaire coloré présentant au moins une nanoparticule formée à sa surface par germination hétérogène.

Selon un autre objet de l'invention, le procédé peut également comprendre une autre étape, après l'obtention du matériau particulaire coloré, lors de laquelle est appliqué un stimulus sur ledit matériau particulaire coloré. Un tel stimulus permettant notamment de modifier la couleur du matériau particulaire coloré.

Préférentiellement, ledit stimulus est un stimulus externe tel qu'un traitement thermique, l'exposition à un rayonnement UV, l'utilisation d'un laser, une réhydratation spontanée ou provoquée. Ceci va permettre d'agir sur la forme, la taille des nanoparticules et l'indice optique environnant et par conséquent leur couleur, modifiant ainsi la couleur du matériau particulaire coloré.

### Matériau particulaire coloré

Selon un autre aspect, l'invention concerne un matériau particulaire coloré obtenu par le procédé selon l'un des quelconques modes de réalisation précédemment décrits.

Préférentiellement, le matériau particulaire coloré selon l'invention comprend à sa surface au moins une nanoparticule formée par germination hétérogène, préférentiellement une multitude de nanoparticules formées par germination hétérogène.

Selon un autre mode de réalisation, le matériau particulaire coloré comprend au moins une nanoparticule à sa surface, ladite nanoparticule présentant une forme sphérique, sphéroide ou anisotrope telle que des bâtonnets, des cubes, des triangles, des bipyramides, ....

Selon un mode de réalisation particulier, au moins une nanoparticule formée à la surface du matériau particulaire coloré selon l'invention présente une plus grande dimension comprise entre 2 et 100nm, préférentiellement entre 10 et 50nm.

### Composition colorée

Enfin, selon un dernier aspect, l'invention concerne une composition colorée comprenant au moins un matériau particulaire coloré selon l'invention, et au moins un solvant dans lequel ledit matériau particulaire coloré est dispersé.

Préférentiellement, le solvant est choisi parmi les alcools tels que l'éthanol, les esters tels que l'acétate d'éthyle, ou un solvant aqueux.

### Exemples

### Exemple 1 : Procédé de coloration selon l'invention au moyen de sels d'or

Dans cet exemple, les inventeurs ont coloré un substrat particulaire avec des nanoparticules d'or.

Pour y parvenir, les inventeurs ont mis en œuvre le procédé comprenant les étapes suivantes :
a. Mélange sous agitation, à température ambiante d'une suspension dans un ballon de 50mL, la suspension comprenant :
   - 2 g de substrat, à savoir de la fritte de verre ;
   - 10 mL d'eau distillée ;
   - 1,037mL de TEA concentré à 50mM ; et
   - 0,518mL de KAuCl₄ concentré à 10mM.
   Le mélange de l'étape a) a été réalisé jusqu'à ce que la couleur de la suspension soit stabilisée, à savoir pendant 15 min.
a. isolation du matériau particulaire coloré comprenant les sous-étapes suivantes :
   i. Centrifugation à 4000rpm pendant 3 minutes du mélange de l'étape a) de façon à isoler le matériau particulaire coloré et la phase liquide,
   ii. Lavage à l'eau du matériau coloré issu de l'étape précédente,
   iii. Centrifugation à 4000rpm pendant 3 minutes du mélange de l'étape précédente de façon à isoler le matériau particulaire coloré et la phase liquide,
   iv. Séchage au moyen d'une étuve à 80°C du matériau particulaire coloré issue de l'étape précédente, de façon à obtenir un matériau particulaire coloré comprenant au moins une nanoparticule formée à sa surface par germination hétérogène, sous forme de poudre.

Le matériau particulaire coloré obtenu est ensuite traité thermiquement (800°C) afin d'obtenir la couleur définitive. Ainsi, la fritte de verre (sous forme pulvérulente) comprenant les nanoparticules d'or formées à sa surface est ainsi fondue, puis refroidie afin d'obtenir de l'émail coloré grâce au matériau particulaire coloré (i.e la fritte de verre).

Les paramètres colorimétriques sont mesurés au moyen d'un spectrophotomètre, selon le modèle de couleur Lab. Ce modèle bien connu de l'homme du métier, dénommé Lab, permet de mesurer et de quantifier de manière plus précise les couleurs sur un très large spectre. Ainsi, L est l'initiale de Luminosité et a et b désignent les composantes chromatiques.

Les paramètres colorimétriques de l'émail coloré selon l'exemple 1 sont les suivants :
- L* = 44.15 ;
- a = 40.18 ; et
- b = 12.90.

Cet exemple démontre ainsi que le procédé selon l'invention permet de colorer un matériau particulaire par germination hétérogène à température ambiante.

### Exemple 2 : Procédé de coloration selon l'invention au moyen de sel d'or et de sel d'argent

Dans cet exemple, les inventeurs ont coloré un substrat particulaire avec des nanoparticules d'or, puis des nanoparticules d'argent. Le procédé est le suivant :
a. Mélanger sous agitation, à température ambiante d'une suspension dans un ballon de 50mL, pendant 15 minutes, la suspension comprenant :
   - 2g de substrat, à savoir la fritte de verre
   - 10 mL d'eau distillée ;
   - 1,037mL de TEA concentré à 50mM ; et
   - 0,518mL de KauCl₄ concentré à 10mM
b. Mélanger sous agitation, à 80°C, pendant 15 minutes, d'une suspension comprenant :
   - le matériau particulaire coloré ayant au moins une nanoparticule d'or, servant de nouveau substrat ;
   - 0,375mL de citrate concentré à 50mM ;
   - 0,187mL de AgNO₃ concentré à 10mM ; et
   - 600µL d'acide ascorbique concentré à 50mM.
c. isolation du matériau particulaire coloré obtenu, ladite isolation comprenant les sous-étapes suivantes :
   i. Centrifugation à 4000rpm pendant 3 minutes du mélange obtenu de façon à isoler le matériau particulaire coloré et éliminer la phase liquide ;
   ii. Lavage à l'eau du matériau particulaire coloré ;
   iii. Centrifugation à 4000rpm pendant 3 minutes du mélange de l'étape précédente de façon à isoler le matériau particulaire coloré et éliminer la phase liquide ;
   iv. Séchage du matériau particulaire coloré séparé de la phase liquide, ledit matériau particulaire coloré comprenant au moins une nanoparticule d'or et au moins une nanoparticule d'argent.

Là encore, comme pour l'exemple 1, une étape de traitement thermique à une température de 800°C permet de transformer la fritte de verre en émail coloré.

Les paramètres colorimétriques de l'émail sont alors mesurés au moyen d'un spectrophotomètre, selon le modèle de couleur Lab :
- L* = 29.32 ;
- a = 35,96 ; et
- b = 20,61

### Exemple 3 : Procédé de coloration selon le procédé de l'invention d'un grand volume avec des sels d'or

Cet exemple vise à démontrer que le procédé peut être mis en œuvre avec un volume plus important, sans affecter l'efficacité de coloration du procédé selon l'invention.

Le procédé utilisé dans cet exemple comprend la mise en œuvre des étapes suivantes :
a. Mélange sous agitation, à température ambiante, pendant 15 minutes, d'une suspension dans un ballon de 500mL, la suspension comprenant :
   i. 10g de substrat, à savoir la fritte de verre
   ii. 100 mL d'eau distillée ;
   iii. 5,183mL de TEA concentré à 50mM ; et
   iv. 2,592de KauCl₄ concentré à 10mM.
b. isolation du matériau particulaire coloré issu de l'étape précédente par la mise en œuvre des sous-étapes suivantes :
   i. Centrifugation à 4000rpm pendant 3 minutes du mélange obtenu de façon à isoler le matériau particulaire coloré et élimination de la phase liquide ;
   ii. Lavage à l'eau du matériau coloré ;
   iii. Centrifugation à 4000rpm pendant 3 minutes du mélange de l'étape précédente de façon à isoler le matériau particulaire coloré et élimination de la phase liquide ;
   iv. Séchage du matériau particulaire coloré comprenant au moins une nanoparticule d'or formée à sa surface par germination hétérogène.

Là encore, une étape de traitement thermique du matériau particulaire coloré est mise en œuvre afin d'obtenir l'émail coloré.

Les paramètres colorimétriques de l'émail coloré, selon le modèle Lab mesurés à l'aide d'un spectrophotomètre, sont les suivants :
- L* = 40,15 ;
- a = 45,01 ; et
- b = 14,74

### Exemple 4 : Procédé de coloration selon le procédé de l'invention d'un grand volume avec des sels d'or et d'argent

Dans cet exemple, les inventeurs ont coloré un substrat particulaire avec des nanoparticules d'or, puis des nanoparticules d'argent dans un grand volume. Le procédé est le suivant :
a. Mélanger sous agitation, à température ambiante d'une suspension dans un ballon de 500mL, pendant 15 minutes, la suspension comprenant :
   - 10 g de substrat, à savoir
   - 100 mL d'eau distillée ;
   - 5,183 mL de TEA concentré à 50mM ; et
   - 2,592 mL de KauCl₄ concentré à 10mM
b. Mélanger sous agitation, à 80°C, pendant 15 minutes, d'une suspension comprenant :
   - le matériau particulaire coloré ayant au moins une nanoparticule d'or, servant de nouveau substrat ;
   - 1,873 mL de citrate concentré à 50mM ;
   - 0,937 mL de AgNO₃ concentré à 10mM ; et
   - 600 µL d'acide ascorbique concentré à 50mM.
c. isolation du matériau particulaire coloré obtenu, ladite isolation comprenant les sous-étapes suivantes :
   i. Centrifugation à 4000rpm pendant 3 minutes du mélange obtenu de façon à isoler le matériau particulaire coloré et éliminer la phase liquide ;
   ii. Lavage à l'eau du matériau particulaire coloré ;
   iii. Centrifugation à 4000rpm pendant 3 minutes du mélange de l'étape précédente de façon à isoler le matériau particulaire coloré et éliminer la phase liquide ;
   iv. Séchage du matériau particulaire coloré séparé de la phase liquide, ledit matériau particulaire coloré comprenant au moins une nanoparticule d'or et au moins une nanoparticule d'argent.

Enfin, une étape supplémentaire de traitement thermique à une température de 800°C permet de colorer un support avec ledit matériau particulaire coloré.

Les paramètres colorimétriques de l'émail coloré, selon le modèle Lab mesurés à l'aide d'un spectrophotomètre, sont les suivants :
- L* = 44,94 ;
- a = 42,58 ; et
- b = 27,53

### Exemple 5 - Vérification de la reproductibilité du procédé selon l'invention

L'objectif de cet exemple est de démontrer que le procédé selon l'invention permet d'obtenir des résultats reproductibles. Pour cela, le procédé décrit à l'exemple 3 a été réalisé 4 fois, la mesure des paramètres colorimétrique du matériau coloré obtenu a été mesuré à l'aide d'un spectrophotomètre.

Les résultats sont présentés dans le tableau 1 ci-dessous :

**[Tableau 1]**

| | L* | a | b |
|---|---|---|---|
| Echantillon 1 | 40,15 | 45,01 | 14,74 |
| Echantillon 2 | 43,9 | 41,15 | 11,59 |
| Echantillon 3 | 44,83 | 42,81 | 10,93 |
| Echantillon 4 | 45,38 | 43,66 | 10,56 |

Les résultats démontrent que le procédé selon l'invention permet d'obtenir des résultats de coloration reproductibles.

## Revendications

1. Procédé de préparation d'un matériau particulaire coloré par germination hétérogène, comprenant la mise en œuvre d'une étape a) de mélange à température ambiante d'une suspension, ladite suspension comprenant :
- au moins un sel d'un élément métallique choisi parmi le groupe constitué d'un sel d'or, un sel d'argent, un sel de cuivre, un sel d'aluminium, un sel de magnésium, un sel d'indium, un sel de nickel, un sel de gallium, un sel de cobalt, un sel de fer, un sel de palladium, un sel de rhodium, un sel de platine, et leurs mélanges, ledit élément métallique présentant un effet plasmonique,
- au moins un agent réducteur choisi parmi le groupe constitué par le tétrahydruroborate de sodium (NaBH₄), l'hydroquinone, le tetrabutylammoniumborohydride (TBH₄), l'hydrazine, le propanal, les sucres, l'acide citrique, l'acide ascorbique, le citrate, le Triéthanolamine (TEA), l'hydrolamine et leurs mélanges, et
- au moins un substrat particulaire choisi parmi un substrat particulaire inorganique du groupe constitué par les silicates, les verres, les oxydes de métaux, les oxydes de terres rares, les métaux, les frittes, les émaux, les glaçures, les céramiques, les pigments d'absorption, et leurs mélanges.

2. Procédé selon la précédente revendication, **caractérisé en ce que** la suspension comprend au moins 5% d'eau en masse par rapport à la masse totale de ladite suspension.

3. Procédé selon l'une des précédentes revendications, **caractérisé en ce que** la plus grande dimension du substrat particulaire est comprise entre 10nm et 1mm.

4. Procédé selon l'une des précédentes revendications, **caractérisé en ce que** la durée de l'étape a) est d'au plus 30 minutes.

5. Procédé selon l'une des précédentes revendications, **caractérisé en ce que** le procédé comprend également une étape b) d'isolation du matériau particulaire coloré obtenu à l'étape a), ledit matériau particulaire coloré présentant au moins une nanoparticule formée à sa surface par germination hétérogène.

6. Procédé selon la précédente revendication, **caractérisé en ce que** l'étape b) d'isolation du matériau particulaire coloré comprend successivement les sous-étapes suivantes :
i. séparation solide /liquide du mélange de l'étape a), pour isoler le matériau particulaire coloré de la phase liquide ; et
ii. séchage pour obtenir le matériau particulaire coloré sous forme sèche.

7. Procédé selon la précédente revendication, **caractérisé en ce que** la séparation solide/liquide est réalisée au moyen d'au moins une technique de séparation solide/liquide choisie parmi la filtration, la sédimentation, la centrifugation, l'évaporation, la lyophilisation et leurs combinaisons.

8. Procédé selon l'une des revendications 5 à 7, **caractérisé en ce que** l'étape b) comprend une sous-étape supplémentaire de lavage du matériau particulaire coloré.

9. Procédé selon l'une des précédentes revendications, **caractérisé en ce que** la plus grande dimension de la nanoparticule présente à la surface du matériau particulaire coloré est comprise entre 2 et 100nm.

10. Procédé selon l'une des précédentes revendications, **caractérisé en ce que** le procédé comprend une étape préalable à l'étape a), de pré-traitement du substrat particulaire au moyen d'un traitement thermique et/ou d'un traitement alcalin et/ou d'un traitement de fonctionnalisation.

## Patentansprüche

1. Verfahren zur Herstellung eines gefärbten partikelförmigen Materials durch heterogene Keimbildung, umfassend die Durchführung eines Schritts a) des Mischens einer Suspension bei Raumtemperatur, wobei die Suspension umfasst:
- mindestens ein Salz eines metallischen Elements, das aus der Gruppe bestehend aus einem Goldsalz, einem Silbersalz, einem Kupfersalz, einem Aluminiumsalz, einem Magnesiumsalz, einem Indiumsalz, einem Nickelsalz, einem Galliumsalz, einem Cobaltsalz, einem Eisensalz, einem Palladiumsalz, einem Rhodiumsalz, einem Platinsalz und deren Mischungen ausgewählt wird, wobei bei dem metallischen Element ein plasmonischer Effekt auftritt,
- mindestens ein Reduktionsmittel, das aus der Gruppe bestehend aus Natriumborhydrid (NaBH₄), Hydrochinon, Tetrabutylammoniumborhydrid (TBH₄), Hydrazin, Propanal, Zuckern, Citronensäure, Ascorbinsäure, Citrat, Triethanolamin (TEA), Hydroylamin und deren Mischungen ausgewählt wird, und
- mindestens ein partikelförmiges Substrat, das aus einem anorganischen, partikelförmigen Substrat aus der Gruppe bestehend aus Silikaten, Gläsern, Metalloxiden, Seltenerdoxiden, Metallen, Fritten, Emaillen, Glasuren, Keramiken, Absorptionspigmenten und deren Mischungen ausgewählt wird.

2. Verfahren nach dem vorstehenden Anspruch, **dadurch gekennzeichnet, dass** die Suspension bezogen auf die Gesamtmasse der besagten Suspension mindestens 5 Massen-% Wasser umfasst.

3. Verfahren nach einem der vorstehenden Ansprüche, **dadurch gekennzeichnet, dass** die größte Abmessung des partikelförmigen Substrats zwischen 10 nm und 1 mm liegt.

4. Verfahren nach einem der vorstehenden Ansprüche, **dadurch gekennzeichnet, dass** die Dauer des Schritts a) höchstens 30 Minuten beträgt.

5. Verfahren nach einem der vorstehenden Ansprüche, **dadurch gekennzeichnet, dass** das Verfahren ferner einen Schritt b) des Isolierens des in Schritt a) erhaltenen gefärbten partikelförmigen Materials umfasst, wobei das gefärbte partikelförmige Material mindestens ein durch heterogene Keimbildung an seiner Oberfläche gebildetes Nanopartikel aufweist.

6. Verfahren nach dem vorstehenden Anspruch, **dadurch gekennzeichnet, dass** der Schritt b) des Isolierens des gefärbten partikelförmigen Materials nacheinander die folgenden Teilschritte umfasst:
i. Fest-Flüssig-Trennen der Mischung aus Schritt a), um das gefärbte partikelförmige Material von der flüssigen Phase zu isolieren; und
ii. Trocknen, um das gefärbte partikelförmige Material in trockener Form zu erhalten.

7. Verfahren nach dem vorstehenden Anspruch, **dadurch gekennzeichnet, dass** das Fest-Flüssig-Trennen mittels mindestens einer Fest-Flüssig-Trenntechnik realisiert wird, die aus Filtration, Sedimentation, Zentrifugation, Verdampfung, Lyophilisation und deren Kombinationen ausgewählt wird.

8. Verfahren nach einem der Ansprüche 5 bis 7, **dadurch gekennzeichnet, dass** Schritt b) einen zusätzlichen Unterschritt des Waschens des gefärbten partikelförmigen Materials umfasst.

9. Verfahren nach einem der vorstehenden Ansprüche, **dadurch gekennzeichnet, dass** die größte Abmessung des auf der Oberfläche des gefärbten partikelförmigen Materials vorhandenen Nanopartikels zwischen 2 und 100 nm liegt.

10. Verfahren nach einem der vorstehenden Ansprüche, **dadurch gekennzeichnet, dass** das Verfahren einen dem Schritt a) vorausgehenden Schritt des Vorbehandelns des partikelförmigen Substrats mittels einer Wärmebehandlung und/oder einer alkalischen Behandlung und/oder einer Funktionalisierungsbehandlung umfasst.

## Claims

1. A method for preparing a colored particulate material by heterogeneous nucleation, comprising implementing a step a) of mixing a suspension at room temperature, said suspension comprising:
- at least one salt of a metallic element selected from the group consisting of a gold salt, a silver salt, a copper salt, an aluminum salt, a magnesium salt, an indium salt, a nickel salt, a gallium salt, a cobalt salt, an iron salt, a palladium salt, a rhodium salt, a platinum salt, and mixtures thereof, said metallic element having a plasmonic effect,
- at least one reducing agent selected from the group consisting of sodium tetrahydridoborate (NaBH₄), hydroquinone, tetrabutylammonium borohydride (TBH₄), hydrazine, propanal, sugars, citric acid, ascorbic acid, citrate, triethanolamine (TEA), hydrolamine and mixtures thereof, and
- at least one particulate substrate selected from an inorganic particulate substrate from the group consisting of silicates, glasses, metal oxides, rare-earth oxides, metals, frits, enamels, glazes, ceramics, absorption pigments and mixtures thereof.

2. The method according to the preceding claim, **characterized in that** the suspension comprises at least 5% water by mass with respect to the total mass of said suspension.

3. The method according to one of the preceding claims, **characterized in that** the largest dimension of the particulate substrate is between 10 nm and 1 mm.

4. The method according to one of the preceding claims, **characterized in that** the duration of step a) is at most 30 minutes.

5. Method according to one of the preceding claims, **characterized in that** the method also comprises a step b) of isolating the colored particulate material obtained in step a), said colored particulate material having at least one nanoparticle formed on the surface thereof by heterogeneous nucleation.

6. The method according to the preceding claim, **characterized in that** step b) of isolating the colored particulate material successively comprises the following sub-steps:
i. solid/liquid separation of the mixture from step a) in order to isolate the colored particulate material from the liquid phase; and
ii. drying in order to obtain the colored particulate material in dry form.

7. The method according to the preceding claim, **characterized in that** the solid/liquid separation is carried out by means of at least one solid/liquid separation technique selected from filtration, sedimentation, centrifugation, evaporation, lyophilization and combinations thereof.

8. The method according to one of claims 5 to 7, **characterized in that** step b) comprises an additional sub-step of washing the colored particulate material.

9. The method according to one of the preceding claims, **characterized in that** the largest dimension of the nanoparticle present on the surface of the colored particulate material is between 2 and 100 nm.

10. The method according to one of the preceding claims, **characterized in that** the method comprises a step prior to step a), of pretreating the particulate substrate by means of heat treatment and/or alkaline treatment and/or functionalization treatment.
